# EUROPEAN PATENT APPLICATION

(11) **EP 2 290 993 A1**
(43) Date of publication of application: **02.03.2011**
(21) Application number: 09168937.2
(22) Date of filing: 28.08.2009
(51) Int. Cl.: H04N 13/00, G02B 27/22

(54) **Lens system for three-dimensional display applications**

(71) Applicant: Vrije Universiteit Brussel, 1050 Brussel (BE)
(72) Inventor: Bogaert, Lawrence, 1050 Brussel (BE); Meuret, Youri, 9820 Merelbeke (BE); Thienpont, Hugo, 1755 Gooik-Oetingen (BE)
(74) Representative: Bird, William Edward

(57) **Abstract**

A lens system for a display system, the display system and a method, adapted for three-dimensional display applications are described. The lens system comprises a first lens array (1) adapted for focusing a light beam in a direction comprising a horizontal and/or a vertical component relative to a fixed plane, wherein the light beam is directed through the first lens array (1), a second lens array (2) and a third lens array (3), each adapted for being moved relative to the fixed plane and for controlling the light beam which is incident on the first lens array (1) to a common output direction, wherein the movement of the second lens array (2) and the third lens array (3) is adapted for generating a plurality of images of an object for a plurality of points in time. In this way, any image size can be generated while keeping the implementation costs low and the resolution as high as possible.

## Description

### FIELD OF THE INVENTION

The invention relates to the field of lens systems, adapted for three-dimensional display applications as well as to three-dimensional display systems, methods of operating and manufacturing the same.

### BACKGROUND OF THE INVENTION

US 2007/0019067 A1 describes a 3D image display apparatus which includes a ray modulator that emits a directive ray in a time series manner based on parallax image information, a scanner which deflects the ray from the ray modulator and scans a predetermined plane two-dimensionally with the deflected ray, a light emitting point distributor which is arranged on a light emission side of the scanner to form a plurality of light emitting points, and a light emitting point multiplexer which is arranged on the light emission side of the light emitting point distributor to form a plurality of secondary light emitting points with rays from individual ones of the light emitting points, to enable stereopsis with a super multi-view region at a high resolution.

A large number of parallax views of an image are interlaced onto the projection screen. Each interlaced point emits light with a different propagation direction. The display device is implemented with a combination of two lens arrays. These lens arrays are placed in the screen architecture of a laser projection display. The lens arrays multiplex image information in front of the screen. The first lens array focuses the incoming light. The second lens array is placed after the focus point of the light rays and thus each focused light beam by the first lens array illuminates several lenses of the second lens array. Each illuminated lens of the second lens array generates a copy of the image information that entered the lens of the first lens array. In this way a pixel is multiplexed over the screen surface. Each multiplexed image point shows a different light propagation direction. This is determined by the position of the focus point of the first lens array with a position of the lens in the second lens array that forms a pixel point. The second lens array oscillates in a time-synchronized manner with the different parallax views of the three-dimensional images that are to be shown. Therefore, each parallax view will be multiplexed over the screen surface on different positions. Each position corresponds to a different light propagation direction. This fills the screen surface with many copies of the parallax views. If the spacing between the pixels is maintained, then the size of the original input image has to be smaller than the size of the projection screen. Therefore, such a system is only suited for showing small three-dimensional images.

Furthermore, micromirrors are normally used to direct image information into different viewing directions. Micromirrors are microelectromechanical devices that are fabricated with integrated circuit technology on wafers of 20 to 30 cm diameter. The wafer is cut in several parts adapted for obtaining several micromirror devices. However, due to the specific production process, large micromirror arrays, for instance for a 50 inch diagonal projection screen, are not possible. Therefore, a problem known in the prior art is that only small images are obtainable.

### SUMMARY OF THE INVENTION

It is the object of the invention to provide an alternative lens system, adapted for three-dimensional display applications as well as an alternative three-dimensional display system, methods of operating and manufacturing the same.

The above object is achieved by the subject matter of the independent claims. Preferred embodiments are defined in the sub claims.

An advantage of the present invention is that it can provide with the possibility to generate images comprising any size while enabling low-cost and high-resolution three-dimensional projection applications.

According to a first aspect of the invention, this object is achieved by a lens system, adapted for three-dimensional display applications, comprising a first lens array adapted for focusing a light beam in a direction comprising a horizontal and/or a vertical component relative to a fixed plane, e.g. horizontal or ground plane, wherein the light beam is directed through the first lens array, a second lens array and a third lens array, each of the second and third lens arrays being adapted for being moved relative to the fixed plane and for controlling the light beam which is incident on the first lens array to a common output direction, wherein the movement of the second lens array and the third lens array is adapted for generating a plurality of images of an object for a plurality of points in time.

It is worth noting that the term "light beam in a direction" refers to the general case that a direction of the light beam comprises a pre-determined angle relative to a fixed plane and a pre-determined divergence in the direction as well. Thus, the term "common output direction" means that the output rays are essentially parallel to one another but having a small divergence, such as an angle close to or equal to zero. Different images at different positions for the same object lead to multiple images. Since both the second and the third lens array preferably move, the position of the light beam directed through the lens system changes with steering direction or controlling direction, respectively, and/or with time.

Preferably, the second lens array is positioned at the focal point of the first lens array, the third lens array being adapted for imaging the light spot, comprised by the light beam, formed by the first lens array at the position of the second lens array and the third lens array being adapted for transforming the light beam to a parallel direction comprising a pre-determined divergence. Preferably, the second lens array and the third lens array are associated with a display configuration that is adapted for time sequentially modulating an image into a plurality of directions dependent on the movement of the second lens array and the third lens array. The display configuration preferably comprises a projection display with a spatial light modulator such as a light valve, an LCD transmissive or reflective light modulator or a digital micromirror device as light modulator.

According to a preferred embodiment of the invention, the movement of the second lens array and the third lens array comprises a horizontal movement and/or vertical movement and/or an oscillating movement with respect to the first lens array, the movement being adapted for changing the controlling direction of the light beam. The movement preferably comprises a stepwise and/or a continuous movement, such as sweeping. Preferably, the movement is time synchronized with the information of the generated image.

According to another preferred embodiment of the invention, the movement of the second lens array and the third lens array is performed with a pre-defined speed in a way, such that the second lens array and the third lens array move simultaneously in the same direction. The speed is preferably pre-defined by the distance over which the second and third lens array move and the number of times this has to be repeated per second to show moving images in each viewing direction. Preferably, a sufficient number of images should be displayed per second to provide video.

According to yet another preferred embodiment of the invention, the second lens array and the third lens array correspond to two cylindrical or square lens arrays comprising a distance to each other corresponding to their focal lengths. Preferably, the distance equals the focal length of the lens arrays, wherein the distance is adapted for imaging a point at the second lens array to a parallel light beam at the third lens array. Preferably, the distance between the second lens array and the third lens array is used as a parameter, when the divergence of the output light beam is optimized for all common output directions.

Preferably, the second lens array and the third lens array are identical and thus show identical focal lengths. It goes without saying that for vertically-oriented cylindrical lenses an "exact" alignment in a vertical direction relative to a fixed plane e.g. ground plane is not required.

According to yet another preferred embodiment of the invention, a transparent diffuser is placed after the third lens array adapted for adjusting the viewing angles of the generated images. Preferably, the first lens array, the second lens array and the third lens array correspond to transparent components, more preferably comprising refractive, diffractive and/or holographic components.

According to a second aspect of the invention, this object is achieved by a method, adapted for three-dimensional display applications, comprising the steps: a) focusing a light beam in a direction comprising a horizontal and/or a vertical component relative to a fixed plane, b) moving at least a portion of a lens system relative to the fixed plane, and c) controlling the light beam directed through the lens system to a common output direction, thereby generating a plurality of images of an object for a plurality of points in time.

Hence, the lens system is adapted for generating images with any size, very small to very large. Preferably, the size of the display device comprising three lens arrays corresponds with the size of the image information. Large lens arrays are preferably generated with one-dimensional cylindrical lenses or two-dimensional lenses with a pre-defined aspect ratio as the pixel information of the image formed by the display configuration. However, lenses with a square, rectangular or circular footprint can also be used with pixels with a different aspect ratio.

According to a preferred embodiment of the invention, the method further comprises time sequentially modulating an image into a plurality of directions dependent on the movement of the second lens array and the third lens array. A spatial light modulator such as a light valve, an LCD transmissive or reflective light modulator or a digital micromirror device can be used as light modulator.

Preferably, the movement of the second lens array and the third lens array comprises a horizontal movement and/or vertical movement and/or an oscillating movement with respect to the first lens array adapted for changing the controlling direction of the light beam. Preferably, the movement comprises a stepwise and/or a continuous movement.

According to another preferred embodiment of the invention, the movement is time synchronized with the information of the generated image. Preferably, the movement of the second lens array and the third lens array is performed with a pre-defined speed in a way, such that the second lens array and the third lens array move simultaneously in the same direction.

The area of a pixel of the incoming light distribution preferably fits or is smaller than the footprint of the lenses. Preferably, the angles of the incoming light distribution are at least partly collimated to prevent cross-talk between the lenses. However, it is also possible that the lens system is used such that one pixel of the incoming light distribution fits several lenses.

It is worth noting that a multi-view three-dimensional display device is preferably generated by placing a lenticular or cylindrical array or an array of slits or a switchable lenticular array or a switchable array of slits after an imaging unit. In front of each elementary lens or slit a multitude of different pixels are present. The image information of each pixel is directed in a different direction by the lens or slit structure because of the pixel's position with respect to the lens or slit. The viewing-zone images are spatially distributed over the imaging unit. Preferably, the resolution of each viewing-zone image is only part of that of the imaging unit. Hence, the resolution of the display configuration is preferably maintained, i.e. preferably the resolution remains constant, whereas in a common approach the resolution is decreased in the horizontal and/or in the vertical direction. The sizes of the images or pictures that can be seen correspond to the size of the imaging device or imaging unit, respectively. A flat-screen imaging device is preferably used. Such a device is manufactured in very small to very large sizes.

According to a third aspect of the invention, this object is achieved by a system comprising a programmable microprocessor, a controller adapted for controlling a display configuration comprising a predetermined number of pixels, wherein the controller further controls a motor adapted for driving a lens system according to the first aspect of the invention.

It is an important idea of the invention to generate a viewing zone by moving a second and third lens array with respect to a first lens array. The number of viewing zones is preferably determined by the resolution of the moving mechanism and thus can be very large.

The movement of the lens arrays and the time that the display configuration shows the modulated images can be configured to reduce or eliminate dark bands between the viewing zones.

The present invention also provides a controller for a lens system, adapted for three-dimensional display applications, the lens system comprising:
a first lens array adapted for focusing a light beam in a direction comprising a horizontal and/or a vertical component relative to a fixed plane, wherein the light beam is directed through the first lens array,
a second lens array and a third lens array, each adapted for being moved relative to the fixed plane,
wherein the controller is adapted to control the movement of the second lens array and the third lens array for generating a plurality of images of an object for a plurality of points in time and for controlling the light beam which is incident on the first lens array to a common output direction.

The second lens array and the third lens array are associated with a display configuration, and the controller is adapted to allow time sequentially modulating of an image in a plurality of directions dependent on the movement of the second lens array and the third lens array. The controller is preferably adapted to control the movement time synchronized with the information of the generated image. The display configuration can comprise a projection display with a spatial light modulator such as a light valve, an LCD transmissive or reflective light modulator or a digital micromirror device as light modulator and the controller is then adapted to synchronise the movement of the second and third lens arrays with the operation of the spatial light modulator such as a light valve, an LCD transmissive or reflective light modulator or digital micromirror device.

Optionally, the movement of the second lens array and the third lens array controlled by the controller comprises a horizontal and/or vertical movement and/or an oscillating movement with respect to the first lens array adapted for changing the controlling direction of the light beam. The movement can comprise a stepwise and/or a continuous movement.

The controller is preferably adapted to control the movement of the second lens array and the third lens array with a pre-defined speed or pre-defined speeds in a way, such that the second lens array and the third lens array move simultaneously in the same direction.

### BRIEF DESCRIPTION OF THE DRAWINGS

These and other aspects of the invention will be apparent from and elucidated with reference to the embodiments described hereinafter.

In the drawings:
- Fig. 1: shows an optical system adapted for generating a controllable light beam in a horizontal direction relative to a fixed plane, e.g. ground plane, for (a) the horizontal and for (b) the vertical plane according to a preferred embodiment of the invention;
- Fig. 2: shows an optimized controlling system for a projected ten times enlarged image illustrated for zero and large shift of the movable lens arrays according to a preferred embodiment of the invention;
- Fig. 3: shows a system comprising a controller according to a preferred embodiment of the invention;
- Fig. 4: shows a system comprising a light emitting diode and a digital micromirror device according to a preferred embodiment of the invention;
- Fig. 5: shows a projection display system and a Fresnel lens according to a preferred embodiment of the invention;
- Fig. 6: shows a controlling system for the movable lens arrays according to a preferred embodiment of the invention;
- Fig. 7: shows a controlling system for the movable lens arrays according to a preferred embodiment of the invention;
- Fig. 8: shows a controlling system for the movable lens arrays according to a preferred embodiment of the invention; and
- Fig. 9: shows a controlling system for the movable lens arrays according to a preferred embodiment of the invention.

### DETAILED DESCRIPTION OF EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

It is an idea of the invention that three lenses or lens structures are used to generate a light beam of which the rays essentially propagate parallel to one another and of which the propagation direction of all the rays are changed. Preferably, the propagation directions are distributed in the horizontal plane. In some embodiments, the first lens focuses incoming light to a light spot in both the horizontal and vertical direction such that the incoming light is focused in at least the plane that corresponds with the plane in which the propagation direction is changed. This light spot is preferably located at the focal length of the first lens. A focusing in a direction different from the propagation direction is not required. It will prevent pixel blurring in this direction.

Preferably, two cylindrical or square lenses, in the following referred to as second and third lens, are placed after a first lens. The two cylindrical or square lenses can be identical and in such a case the cylindrical lenses have the same focal length. They are preferably separated by a distance equal to their focal length. The second lens is placed in the focus of the first lens. The third lens images the light spot that is formed by the first lens at the position of the second lens. Due to the fact that the light spot is located at focal length from the third lens, it is preferably transformed to a parallel light beam exciting the third lens. In the following, the exiting beam is also called output beam.

The second and third lenses are essentially moved in the horizontal direction. This movement is adapted for changing the horizontal propagation direction of the bundle of rays that exit the third lens. Both lenses preferably move simultaneously in the same direction. The second lens and the third lens may be constructed from the same sheet of material, e.g. a plastic material such as PMMA. In this way the second lens and the third lens always move together. The movement of the second lens and the third lens is preferably an oscillating motion with respect to the first lens.

When the second lens and the third lens move in the horizontal plane relative to a fixed plane, the focused light spot by the first lens will no longer be located on the optical axis going through the middle of the second and the third lens. Preferably, the light rays from the first lens will refract at the second lens, and again a parallel light beam exits the third lens, but one that propagates into another horizontal direction, i.e. at an angle to the optical axis. The direction is preferably controlled by the exact position of the second and third lens with respect to the first lens. It is noted that the horizontal focusing by the first lens is necessary to realize the horizontal steering or controlling action together with the second and the third lens. The vertical collimation by the first lens is adapted for reducing pixel blurring in the vertical direction at the output of the third lens.

It is noted that the second lens is used to enable wide steering angles and a good fill factor of the light beam exiting the third lens, i.e. a good fill factor of the output light beam. With these three lenses, an incoming light distribution is directed into a viewing direction. The area of the incoming light distribution has to fit or be smaller than the footprint of the lenses. However, the lens system can also be used in a way such that several lenses transform one pixel of the incoming light distribution.

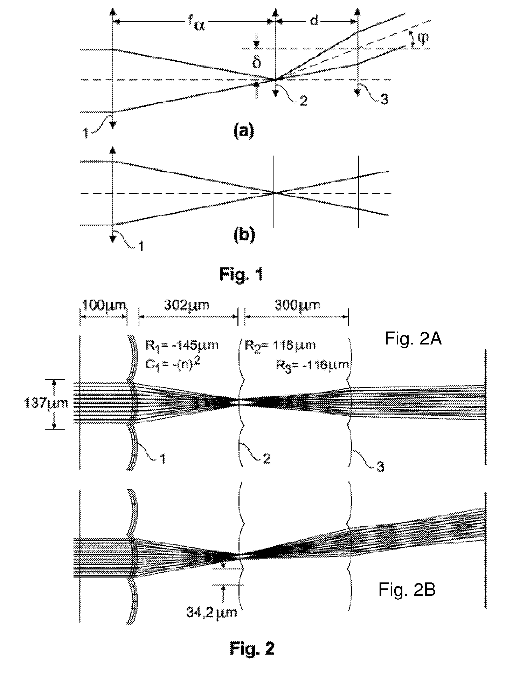

Fig. 1 shows an optical system adapted for generating a controllable light beam in the horizontal direction relative to the fixed plane e.g. ground plane and illustrated in the horizontal plane, as shown in Fig. 1 (a), and in the vertical plane, as shown in Fig. 1 (b), according to a preferred embodiment of the invention. A lens 1 with a square footprint is used to focus the collimated light, e.g. containing image information, in both the horizontal and vertical direction relative to the fixed plane. This is followed by a movable component comprising two cylindrical or square lenses 2, 3. Both cylindrical lenses 2, 3 have the same focal length and are separated by a distance equal to their focal length according to the preferred embodiment of the invention. The front side of this component, i.e. the surface facing the first lens, is placed at a distance equal to the focal length of the first lens. Light rays are controlled or steered in different horizontal directions by controlling the horizontal position of the movable component with respect to the first lens 1. The movable component 2, 3 does not affect the vertical propagation direction because it does not focus light in that direction. The size of the footprint of the lenses corresponds to the pixel size at the input of the lens system.

The three lenses 1, 2, 3 shown in Fig. 1 (a) are used as part of a display device adapted for controlling an entire image to be projected into one direction at a certain moment in time. The movement of the movable component 2, 3 can be an oscillating movement with respect to the first lens, the movement being synchronised with the image information to be projected. For this purpose, each pixel of the incoming image has to be followed by the set of three lenses 1, 2, 3. Therefore, three lens arrays 1, 2, 3 are used. These can be regarded as the repetition of the first 1, second 2 and third lenses 3, respectively, over an area of the image size. The first lens 1 is preferably implemented with a square footprint to maximize the fill factor of the lenses over the image area. The second and third lenses 2, 3 are implemented as cylindrical lenses in this embodiment. The lens system, e.g. for use with an image modulation system, operates in a time-sequential manner synchronizing the image information with the moving mechanism of the second and third lens array. When an image is modulated that is meant to be seen in a certain viewing zone, the moving mechanism sets the second and third lens arrays in the correct position adapted for directing the image in that viewing direction. To obtain a 3D effect, the images at points of time are steered in directions that are consistent with the light field from the scene/ object that the system visualizes.

The image modulation system has to be sufficiently fast to modulate a large number of images in a certain period of time. These are all the images for different viewing zones, wherein the exact number is determined by the angular resolution of the desired three-dimensional effect, for different colour components, such as red, green and blue, and for sufficient images for every viewing zone to generate moving images or a video, such as 50 images per viewing zone per second. For example, the total number of modulated images per second can be 50 x 3 x number of viewing zones according to the preferred embodiment of the invention. Each modulated image comprises a pre-determined number of gray scale values. For instance, 8-bit (0-255) is equal to 256 possible gray scale values.

The size of the pixels at the output of the lens system, i.e. at the output of the third lens 3, can be different than the size of the pixels of the image at the input, i.e. at the first lens 1. The output pixel size can be expressed as a function of the system parameters. The achievable horizontal viewing angle can also be expressed as a function of the system parameters. The positions from which the viewer will see two different images by both eyes can also be expressed as a function of the system parameters.

Fig. 2 shows an optimized controlling system for a projected ten times enlarged image shown for zero (upper part of Fig. 2) and for a large shift (lower part of Fig. 2) of the movable lens arrays according to a preferred embodiment of the invention. The value for the large shift is arbitrarily chosen and thus, according to other preferred embodiments of the invention, also larger shifts compared to the mirror pixel pitch can be chosen. The original image modular size comprises square pixels with a pixel pitch of 13.68 µm. The distance between the lenses in the array is therefore 136.8 µm. Both parts of Fig. 2 show a horizontal cross section of the lens system.

The divergence of the output beam is minimal and the lenses of the first lens array 1 focus light at the vertex of the first cylindrical lens, i.e. of the lenses of the second lens array 2. In embodiments of the present invention, the lenses of the first lens array 1 are adapted for minimizing spherical aberrations. The lenses of the first lens array 1 can be implemented in different ways: an aspherical profile towards the second lens array 2, an aspherical profile towards input or a spherical profile towards input. It is noted that a spherical profile towards the second lens array 2 does not reduce spherical aberrations. Further, it is noted that a spherical profile towards input is preferred because the results are similar to that of an aspherical profile, but the cost of the lens system is reduced. It is noted that the thickness of the movable lens array is preferably optimised in order to realize the same divergence in all controlling directions and to minimize its overall value. According to the preferred embodiment of the invention, an optical system is used that steers or controls images that are enlarged ten times by the projection lens. The system parameters for the ten times enlarged image are shown in Fig. 2. A half-divergence angle of 1.7 degrees is simulated in all controlling directions.

In this embodiment the lenses are arranged as follows. The first lens array 1 has lenses that are convex. The lenses have a radius of curvature of 145 micron and have a conic constant (C₁) that is preferably minus the square of the refractive index (n) of the lens material to reduce spherical aberrations. The first lens array may be made from a transparent plastic material such as PMMA. The first lens array 1 may be formed from a sheet of material in which case its thickness can be 100 micron. Each lens of the first lens array can have a width of 137 micron, i.e. the lenses of the first lens array 1 are spaced at a distance of 137 micron. In the direction of light travel a movable lens array 2, 3 is located after the first leans array 1. This movable lens array comprises two convex cylindrical lenses 2, 3. Both the first and second of these lenses are arranged on the same optical axis. The lenses of the movable lens array 2, 3 are cylindrical lenses that focus light in a horizontal direction (i.e. the physical axis of the cylindrical lenses is vertical). The radius of curvature of the lenses of the second and third array 2,3 have a radius of 116 micron. The conic constant of the lenses of the second and third array 2, 3 is zero. The first lens array 1 is set at a distance of 302 micron from the second lens array 2. The second and third lens arrays may be formed from a sheet of material, e.g. of transparent plastic material such as PMMA. The width of the sheet is preferably 300 micron. The second and third lens arrays 2, 3 are arranged to move together horizontally with respect to the first leans array 1, e.g. in an oscillating movement having a trajectory of plus or minus 34.2 micron. Fig. 2a shows the light being focussed by the first lens array 1 on the vertices of the lenses of the second lens array, whereas Fig. 2B shows the movable lens array 2, 3 being moved 34.2 micron in the horizontal direction with respect to the first leans array 1 resulting in an output beam at an angle to the optical axis.

The light rays in the steered light beam are typically not perfectly parallel to one another since they diverge. The divergence is minimal when the lenses of the first lens array 1 focus all light rays to one point at the vertex of the lenses of the second lens array 2 (Fig. 2A). It is noted that when using a lens with a spherical-profile shape, spherical aberrations are reduced when the spherical profile is directed towards the input light distribution. In this way, more or less collimated light will refract at two surfaces therefore minimizing spherical aberrations. By implementing the first lens array 1 with an aspheric profile all light rays with the same input direction will be focused to one point at the lenses of the second lens array 2. This light point is transformed to a parallel set of rays exiting the lenses of the third lens array 3.

When the second and third lens arrays are moved in the horizontal direction, the focus point is moved from the ideal vertex position of the lenses of the second lens array 2. Because of this, the divergence of the output beam will increase for larger controlling directions. However, the space between the lenses of the second and third lens arrays 2, 3 is optimised to minimise the divergence and to obtain the same divergence in all steering or controlling directions.

When the pixel size of the input image increases, a new screen structure has to be used with lenses comprising a larger footprint. In a rear-projection setup, this will also imply that the angular extent of the input rays is smaller. Such rays will therefore be focused to a smaller spot compared to a rear-projection system for smaller images. Therefore, the divergence of the output beam becomes smaller for larger images. According to another preferred embodiment of the invention, for a five times larger image than mentioned above, i.e. for a fifty times enlarged image, the simulated half-divergence angle corresponds to a value of 0.35 degrees.

By changing the horizontal position of the second and third lens array 2, 3, the images are steered toward different horizontal directions. It is worth noting that a parallel output beam is obtained with the same divergence in all steering directions. Therefore, it becomes possible to generate multi-view displays with high-light output using existing projection displays.

According to other preferred embodiments of the invention, the incoming light distribution shows pixels with a light distribution that can be sufficiently focused to a spot by a single lens surface, for instance a parallel beam of light, a point of light or a state in between these systems.

According to a preferred embodiment of the invention, the screen is used in a rear-projection setup. The viewer and projector are positioned on opposite sides of the screen. A large lens is placed before the screen on the projector side adapted for collimating the light rays that are projected onto the screen. This lens spreads the entire screen surface. A large Fresnel lens is preferably used for this purpose. Its focal length equals the distance between the projector and the screen. It is noted that a fast modulation device is preferably used in a rear-projection setup. Such a modulating device may be a spatial light modulator such as a light valve, e.g. transmissive LCD or reflective LCD such as an LCOS device. A preferred light valve is a digital micromirror device.

Furthermore, it is worth noting that the screen can be placed after a display configuration adapted for collimated light output and fast time-sequential modulation of images, such as in OLED displays, in laser displays, and/or in flat panel displays, such as in an LCD display and/or in an LED array, wherein OLED stands for organic light emitting diode, LCD stands for liquid crystal display and LED for light emitting diode, respectively.

Horizontal and vertical parallax images are obtained according to yet another preferred embodiment of the invention. These are images seen from different horizontal and vertical viewing angles. For this an extra degree of motion is added to the second and third lens array. Horizontal motion preferably corresponds with steering or controlling the horizontal parallax images toward different directions in the horizontal plane. Vertical motion corresponds with steering the vertical parallax images toward different directions in the vertical plane. This requires a moving mechanism that incorporates both movements, i.e. horizontal and vertical movements. Also the lenses of the second and third lens array have to be lenses with a pre-defined footprint, such as a square footprint or a footprint of any other shape, instead of cylindrical lenses according to a preferred embodiment of the invention. This is necessary due to the light which has to be directed in a horizontal and a vertical direction. Therefore, the first lens preferably focuses light in horizontal and vertical directions.

According to preferred embodiments of the invention, the second and third lens arrays are implemented as one component, e.g. made from a sheet of material, with lenses on both sides, i.e. both arrays are arranged on both sides of the component.

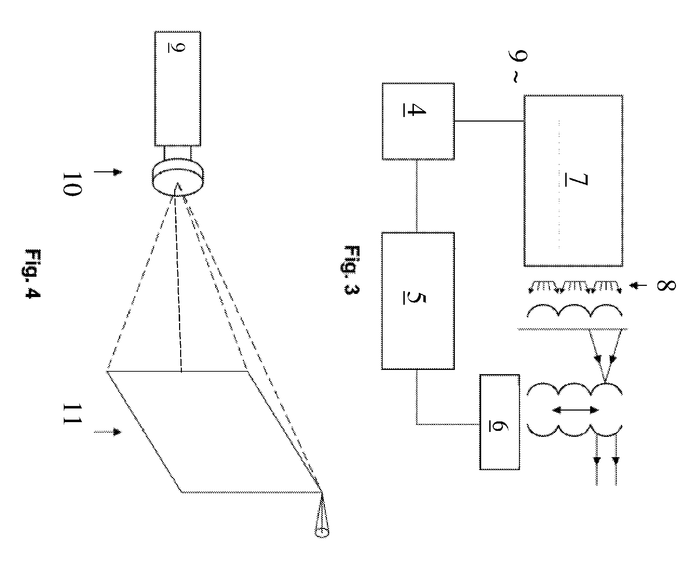

The present invention includes not only a combination of a first lens array 1 and a movable lens array 2, 3) as a lens unit, but also a complete projection system 9. Fig. 3 shows a system with which any of the lens array embodiments of the present invention can be used. It comprises a controller, which can include local intelligence such as a programmable microprocessor according to a preferred embodiment of the invention. The system comprises a controller 4 which may include or comprise a computing device, and a motor 6 adapted for moving the lens system and a driver 5 for driving the motor. A display configuration 7 comprises a number of pixels 8. The controller 4 may be implemented in a microcontroller.

The controller 4 co-operates with the first lens array 1, the second lens array 2 and the third lens array 3, for movement of these relative to a fixed plane and for controlling the light beam which is incident on the first lens array (1) to a common output direction, the controller being adapted to control the movement of the second lens array (2) and the third lens array 3 for generating a plurality of images of an object for a plurality of points in time. The controller is adapted to control the movement of the second lens array (2) and the third lens array (3) with a pre-defined speed or pre-defined speeds in a way, such that the second lens array (2) and the third lens array (3) move simultaneously in the same direction.

The movement of the second lens array (2) and the third lens array (3) is controlled by the controller such that a horizontal and/or vertical movement and/or an oscillating movement is performed with respect to the first lens array 1 which adapted for changing the controlling direction of the light beam. The movement can comprise a stepwise and/or a continuous movement.Any of the functionality of the controller 4 may be implemented as hardware, computer software, or combinations of both. The controller 4 may be implemented with a general purpose processor, an application specific integrated circuit (ASIC), a field programmable gate array (FPGA) or other programmable logic device, discrete gate or transistor logic, discrete hardware components, or any combination designed to perform the functions described herein. A general purpose processor may be a microprocessor, controller, microcontroller or state machine. A processor may also be implemented as a combination of computing devices, e.g., a combination of an FPGA and a microprocessor, a plurality of microprocessors, one or more microprocessors in conjunction with an ASIC, or any other such configuration.

The display configuration 7 comprising a number of pixels 8 is any suitable display capable of sending arbitrary images towards the first leans array 1. The display configuration 7 may include a spatial light modulator such as a light valve, e.g. a transmissive LCD light valve or a reflective LCD light valve such as an LCOS device. The display configuration 7 may include a digital micromirror device in preferred embodiments. The display configuration 7 includes a light source, e.g. LED light sources. Fig. 4 shows a detail of the projection system 9 comprising a light emitting diode 12 and a digital micromirror device 13 according to a preferred embodiment of the invention.

The display configuration 7 may include any additional equipment necessary to display arbitrary images, e.g. video controllers, tape, DVD, or CD-ROM players, television receivers, etc.

The first leans array 1, the second lens array 2 and the third lens array 3 receive the input from the display configuration, and the controller 4 is adapted to allow time sequential modulating of an image in a plurality of directions dependent on the movement of the second lens array 2 and the third lens array 3. The controller 4 is preferably adapted to control the movement time synchronized with the information of the generated image. For the embodiment in which the display configuration comprises a projection display with a spatial light modulator such as a light valve, an LCD transmissive or reflective light modulator or a digital micromirror device as light modulator, the controller is adapted to synchronise the movement of the second and third lens arrays with the operation of the digital micromirror device.

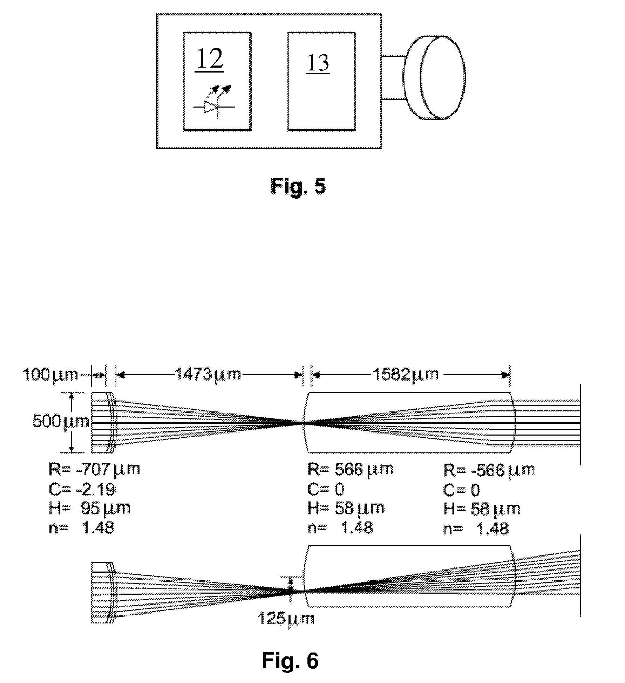

Fig. 5 shows a projection display system according to a preferred embodiment of the invention. The projection system 9 (e.g. as described with reference to Fig. 3) projects light using a projection lens 10. The light is guided towards a Fresnel lens 11.

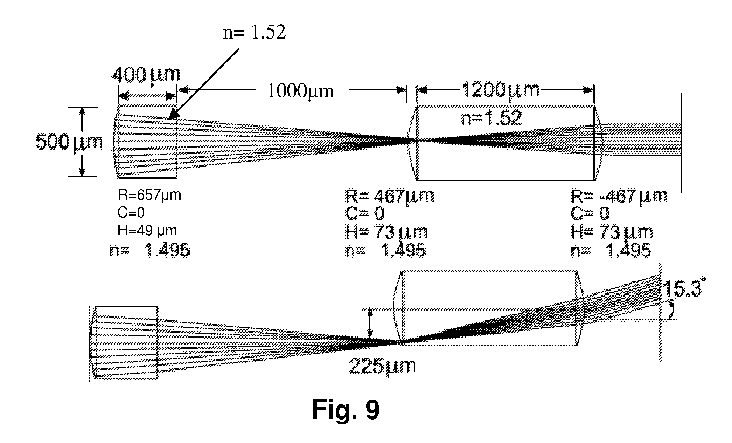

Figs. 6 to 9 show a controlling system for the movable lens arrays according to preferred embodiments of the invention. These figures show alternatives to the embodiment of Fig. 2 and the different parameters used are also indicated in the table below.

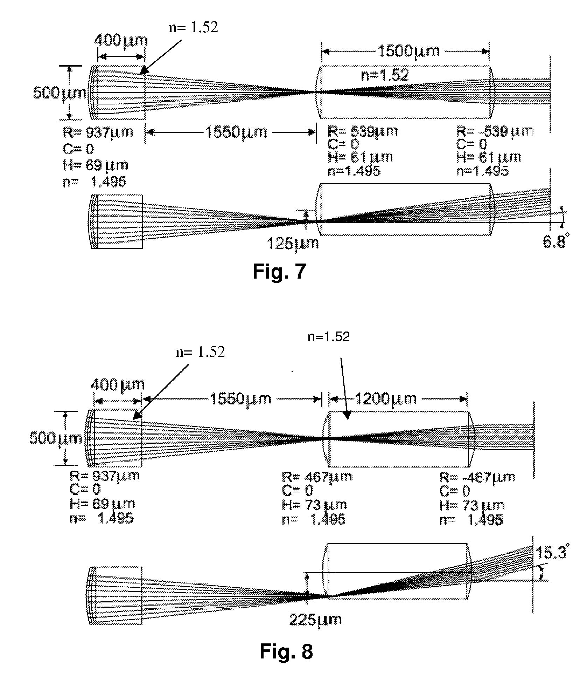

The lens sheet in Fig 6 and Figs. 7, 8 and 9 are constructed in different ways. The lens sheet of the embodiment of Fig. 6 uses one material. The lens sheet of the embodiments of Figs. 7, 8 and 9 use two materials: one material for the lens and one material for the substrate material. These materials can be different and hence can have different refractive indices. Both columns in the table below referring to "refractive index" only specify the value for the lens material and not for the plate material.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practising the claimed invention, from a study of the drawings, the disclosure, and the appended claims. In the claims, the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

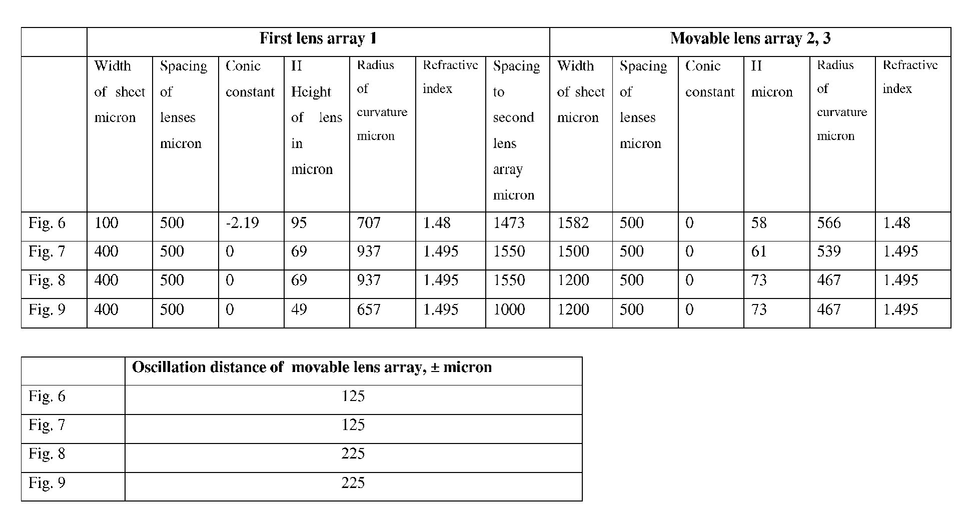

## Claims

1. A lens system, adapted for three-dimensional display applications, comprising:
a first lens array (1) adapted for focusing a light beam in a direction comprising a horizontal and/or a vertical component relative to a fixed plane, wherein the light beam is directed through the first lens array (1),
a second lens array (2) and a third lens array (3), each adapted for being moved relative to the fixed plane and for controlling the light beam which is incident on the first lens array (1) to a common output direction,
wherein the movement of the second lens array (2) and the third lens array (3) is adapted for generating a plurality of images of an object for a plurality of points in time.

2. The lens system according to claim 1, wherein the second lens array (2) is positioned in the focus of the first lens array (1), the third lens array (3) being adapted for imaging the light spot, comprised by the light beam, formed by the first lens array (1) at the position of the second lens array (2) and the third lens array (3) being adapted for transforming the light beam to a parallel direction comprising a pre-determined divergence.

3. The lens system according to one of the preceding claims, wherein the second lens array (2) and the third lens array (3) are associated with a display configuration that is adapted for time sequentially modulating an image into a plurality of directions dependent on the movement of the second lens array (2) and the third lens array (3).

4. The lens system according to claim 3, wherein the display configuration comprises a projection display with a spatial light modulator selected from a light valve, an LCD transmissive or reflective light modulator or a digital micromirror device as light modulator.

5. The lens system according to one of the preceding claims, wherein the movement of the second lens array (2) and the third lens array (3) comprises a horizontal and/or vertical movement and/or an oscillating movement with respect to the first lens array (1) adapted for changing the controlling direction of the light beam.

6. The lens system according to one of the preceding claims, wherein the movement comprises a stepwise and/or a continuous movement.

7. The lens system according to one of the preceding claims, wherein the movement is time synchronized with the information of the generated image.

8. The lens system according to one of the preceding claims, wherein the movement of the second lens array (2) and the third lens array (3) is performed with a pre-defined speed or pre-defined speeds in a way, such that the second lens array (2) and the third lens array (3) move simultaneously in the same direction.

9. The lens system according to one of the preceding claims, wherein the second lens array (2) and the third lens array (3) correspond to two cylindrical or square lens arrays comprising a distance to each other corresponding to their focal lengths.

10. The lens system according to one of the preceding claims, wherein a transparent diffuser is placed after the third lens array (3) adapted for adjusting the viewing angles of the generated images.

11. The lens system according to one of the preceding claims, wherein the first lens array (1), the second lens array (2) and the third lens array (3) correspond to transparent components, preferably comprising refractive, diffractive and/or holographic components.

12. A method, adapted for three-dimensional display applications, comprising the steps:
a) focusing a light beam in a direction comprising a horizontal and/or a vertical component relative to a fixed plane,
b) moving at least a portion of a lens system relative to the fixed plane, and
c) controlling the light beam directed through the lens system to a common output direction, thereby generating a plurality of images of an object for a plurality of points in time.

13. The method according to claim 12, further comprising time sequentially modulating an image into a plurality of directions dependent on the movement of the second lens array (2) and the third lens array (3).

14. The method according to claim 12 or 13, wherein the movement of the second lens array (2) and the third lens array (3) comprises a horizontal and/or vertical movement and/or an oscillating movement with respect to the first lens array (1) adapted for changing the controlling direction of the light beam.

15. A system comprising a controller (5) adapted for controlling a display configuration (7) comprising a predetermined number of pixels (8), wherein the controller (5) further controls a motor (6) adapted for driving a lens system according to one of claims 1 to 11.
